Europäisches Patentamt

European Patent Office

Office européen des brevets

(19)

(11) Veröffentlichungsnummer : **0 090 821**
**B1**

(12) **EUROPÄISCHE PATENTSCHRIFT**

(45) Veröffentlichungstag der Patentschrift :
21.01.87

(21) Anmeldenummer : 82902976.8

(22) Anmeldetag : 07.10.82

(86) Internationale Anmeldenummer :
PCT/DE 82/00198

(87) Internationale Veröffentlichungsnummer :
WO/8301354 (14.04.83 Gazette 83/09)

(51) Int. Cl.⁴ : **H 02 N 11/00, F 02 P 7/06,
G 01 P 3/48**

(54) MAGNETISCHER POLARISATIONSSPRUNGGEBER.

(30) Priorität : 10.10.81 DE 3140302

(43) Veröffentlichungstag der Anmeldung :
12.10.83 Patentblatt 83/41

(45) Bekanntmachung des Hinweises auf die Patenterteilung : 21.01.87 Patentblatt 87/04

(84) Benannte Vertragsstaaten :
DE FR GB SE

(56) Entgegenhaltungen :
DE-A- 2 654 755
DE-A- 2 744 944
DE-A- 2 817 169
DE-A- 2 826 608
GB-A-  271 592
Machine Design, volume 49, no. 18, August 1977
(Cleveland, US) "Wiegand effect simplifies automative ignition circuitry" page 6

(73) Patentinhaber : ROBERT BOSCH GMBH
Postfach 50
D-7000 Stuttgart 1 (DE)

(72) Erfinder : BETHGE, Karin
Güglingweg 18
D-7000 Stuttgart 40 (DE)
Erfinder : ESPER, Friedrich Josef
Römerstrasse 196
D-7250 Leonberg (DE)

**Beschreibung**

Stand der Technik

Die Erfindung geht aus von einem magnetischen Polarisationssprunggeber nach der Gattung des Hauptanspruchs.

Es ist bekannt, bei Gebern die Wechselwirkung von Magnetfeldern mit mechanisch vorbehandelten, ferromagnetischen Drähten (sogenannten Wiegand-Drähten) auszunutzen. Dabei wird durch Ummagnetisierung des Drahtes vermittels eines externen Magnetfelds in einer, den Draht umgebenden Aufnehmerspule ein Spannungsimpuls erzeugt. Es ist bekannt, auf diese Weise Weg-, Winkel-, Lage-, Drehzahlgeber und dergl. darzustellen.

Durch die DE-U-79 06 313 ist beispielsweise ein magnetfeldabhängiger Zündungsgeber bekannt geworden, bei dem die Ummagnetisierung des Drahtendes durch nahe Relativbewegung einer Vielzahl von Magnetpolen unterschiedlicher Polarität zu dem Draht zugeordneten Leitblechen bewirkt wird. Hierzu sind auf einem Rotor mehrere Magnete unterschiedlicher Polarität vorgesehen, und die Leitbleche sind derart angeordnet, daß sie einerseits am Draht und andererseits gegenüber ungleichnamigen, nicht benachbarten Magnetpolen enden. Der Draht wird dabei in axialer Richtung über seine ganze Länge ummagnetisiert, so daß sich ein relativ großer Raumbedarf ergibt.

Weiterhin ist aus der DE-A-26 54 755 ein Impulsgeber, insbesondere ein Drehzahlgeber für Fahrzeuge, mit einem Rotor bekannt geworden, an dem magnetische Abschnitte wechselnder Polarität angebracht sind, und einem Stator, auf dem mindestens eine Spule angebracht ist. Hierbei umschließt ein Teil der Spule einen Wiegand-Draht, und die Spulenteile sind so geschaltet, daß sich die gleichzeitig von den magnetischen Abschnitten in den Spulen induzierten Spannungen gegenseitig aufheben. Bei dem hierzu notwendigen Ummagnetisierungsvorgang des Wiegand-Drahtes sind zwei Schritte notwendig, nämlich Ablösung bzw. Start der sogenannten Blochwände im Endbereich des Drahtes und das « Laufen » der Blochwände durch den Draht hindurch. Hierbei werden die sogenannten « Weiss'schen Bezirke » in energiegünstigere Lagen umgeklappt, was mit geeigneten Meßeinrichtungen durch die großen Barkhausensprünge verdeutlicht werden kann. Zum Ablösen der Blochwände am Ende des Wiegand-Drahtes ist eine höhere Energie notwendig als zu ihrer Fortbewegung. Es hat sich gezeigt, daß bei dem genannten Gegenstand die am Draht herrschenden Feldstärken in der Praxis zum Starten der Blochwandablösungen zu gering sind, so daß er sich in der Praxis nicht eignet.

Um bessere Resultate zu erzielen, ist es aus der DE-A-27 44 944 bekannt geworden, einen Wiegand-Draht quer zum Rotor im großen Abstand anzuordnen. Um überhaupt Blochwandablösung zu erreichen, müssen hier zwei Leitbleche verwendet werden, die von den Drahtenden des Wiegand-Drahts in paralleler Richtung zum Rotor hin verlaufen. Diese Anordnung ist wenig zweckmäßig und aufwendig, da zwei Leitbleche notwendig sind. Außerdem verlangt dieser Impulsgeber einen relativ großen Einbauraum.

Es ist die Aufgabe der Erfindung, einen magnetischen Polarisationssprunggeber nach dem Oberbegriff des Anspruchs 1 zu schaffen, mit dem es möglich ist, eine wesentliche Erhöhung des magnetischen Flusses am Wiegand-Draht zu erreichen, wobei nur geringe Drahtlängen erforderlich sind und das Gerät damit sehr kompakt gestaltet werden kann.

Diese Aufgabe wird gemäß der Erfindung durch die im Kennzeichenteil des Anspruchs 1 genannten Merkmale gelöst. Das hat den Vorteil, daß durch das Leitblech die am Drahtende wirkende magnetische Energie wesentlich verstärkt wird, da im Leitblech die Induktionslinien konzentriert werden. Das Leitblech erhöht somit den magnetischen Fluß quer zum Wiegand-Draht, und zwar nur im Bereich der Drahtspitze. Aufgrund der kompakten Bauweise ist es möglich, den erfindungsgemäßen Geber auch bei solchen Anwendungsfällen einzusetzen, wo die Raumverhältnisse beengt sind, beispielsweise im Zündverteiler eines Kraftfahrzeugs.

Weiterhin gibt die vorgeschlagene Anordnung eine nur geringe Empfindlichkeit gegen mechanische Verstellungen und Änderungen der Umdrehungszahlen (Verwendung als Drehzahlgeber). Weiterhin beeinflussen Verschiebungen des Drahtes mit der Aufnehmerspule in axialer oder radialer Richtung die Signalspannung nur wenig, ebenso wie ein Winkelversatz hinsichtlich der Achse der Magnetpole. Auch kleine Drehschwingungen können sich kaum auswirken, da ein Polarisationssprunggeber und das damit verbundene große Signal nur durch Ummagnetisierung eines Drahtes ausgelöst wird.

Zeichnung

Ausführungsbeispiele der Erfindung sind in der Zeichnung dargestellt und in der nachfolgenden Beschreibung näher erläutert. Es zeigen : Figur 1a, b und c ein erstes Ausführungsbeispiel (Winkel-und Drehzahlgeber) in Draufsicht, Schnitt und Detaildarstellung ; Figur 2a und b ein zweites Ausführungsbeispiel (Zündgeber) ; Figur 3a und b ein drittes Ausführungsbeispiel (Winkel-und Drehzahlgeber).

Beschreibung der Ausführungsbeispiele

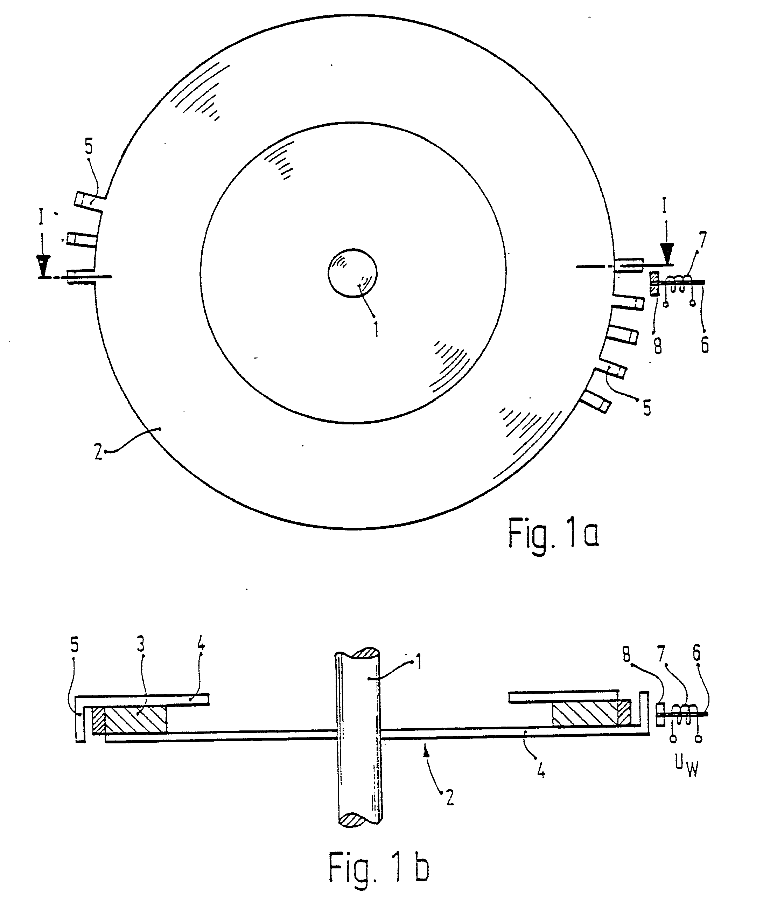

In Figur 1a, b und c ist ein Polarisationssprunggeber dargestellt, der zur Messung von Drehzahlen verwendet werden kann, insbesondere zur Messung von besonders niedrigen Drehzahlen, wie sie beispielsweise bei Antiblockier-Bremssystemen erforderlich sind, wenn die Räder des Fahrzeuges kurz vor dem Stillstand oder dem Zustand des Blockierens sind. Auf einer Welle 1 ist ein Rotor 2 befestigt, der einen ringförmigen Dauermagneten 3 aufweist. Dem Dauermagneten 3 sind Polleitbleche 4 zugeordnet, die mit einer Vielzahl von Klauenpolen 5 beispielsweise 100 Klauenpolen, versehen sind. Die Klauenpole 5 sind über die Polleitbleche 4 in der Weise magnetisiert, daß benachbarte Klauenpole 5 unterschiedliche Magnetpole aufweisen. Die Klauenpole 5 überlappen sich dabei in axialer Richtung des Rotors, wie aus Figur 1b ersichtlich wird. Hierdurch ergibt sich ein in axialer Richtung homogener und ein in der Ebene des Rotors 2 gekrümmter Feldverlauf, wie er aus Figur 1c ersichtlich ist.

Den Klauenpolen gegenüber liegt radial zum Rotor 2 ein mechanisch vorbehandelter ferromagnetischer Draht 6 (sogenannter Wiegand-Draht), der von einer Aufnehmerspule 7 umgeben ist. An seinem dem Rotor 2 zugewandten Ende durchdringt der Draht 6 ein streifen- oder Kreisförmiges Leitblech 8.

Wie aus Figur 1c ersichtlich, erzeugen die benachbart liegenden Klauenpole 5, 5', deren nach außen weisende Enden unterschiedliche Polarität aufweisen, ein in der Ebene des Rotors 2 stark gekrümmtes Magnetfeld. Bei Drehung des Rotors 2 erzeugen die Klauenpole 5 am Ort des Leitbleches 8, der in Figur 1c durch eine strichpunktierte Linie dargestellt ist, daher ein in seiner Stärke und Richtung wechselndes Magnetfeld. Während das Leitblech 8 in unmittelbarer Nähe zu einem Klauenpol 5, 5' nämlich überwiegend einer radialen Magnetfeldkomponente ausgesetzt ist, ist es zwischen den Klauenpolen 5, 5' überwiegend einer tangentialen Magnetfeldkomponente ausgesetzt, die radial auf den Draht 6 einwirkt.

Hierdurch stellen sich zwischen den Klauenpolen 5, 5' physikalisch gesehen Blochwandablösungen im Draht 6 ein und zwar in dem Bereich, der vom Leitblech 8 umgeben ist. Bei Weiterbewegung des Drahtes 6 mit Leitblech 8 relativ zu den Klauenpolen 5, 5' überwiegen dann die radial aus den Klauenpolen 5, 5' austretenden Feldlinien, die über das Leitblech 8 in axialer (bezüglich Drahtachse) Richtung auf den Draht 6 einwirken. Diese im Draht 6 axial wirkende Komponente hat nun einen Transport der Blochwände zur Folge, so daß sich der Ummagnetisierungseffekt über die Drahtlänge fortschreitend auswirkt. Zu beachten ist dabei, daß magnetisch wirksam insoweit überwiegend das vom Leitblech 8 umgebene Stück des Drahtes 6 ist, so daß sich eine sehr präzise zeitliche Abhängigkeit des Ummagnetisierungsvorganges von der Relativbewegung zwischen Rotor 2 und Draht 6 einstellt. Es versteht sich dabei, daß das Leitblech 8 zur Verstärkung der in die Aufnehmerspule 7 induzierten Impulse dient.

Es versteht sich weiter, daß die in Figur 1 und den folgenden Figuren beschriebenen Anordnungen mit Stator und Rotor lediglich beispielhaft gemeint sind. Die erfindungsgemäße Anordnung kann selbstverständlich auch bei Anordnungen verwendet werden, bei denen Magnetpole und Draht zueinander eine andere Form der Bewegung oder Annäherung, beispielsweise in linearer Form, ausüben. Es versteht sich weiter, daß statt einer Anordnung 6, 7, 8 auch mehrere Anordnungen zur Gewinnung zeitlich versetzter Impulse verwendet werden können oder mehrere Magnetpolanordnungen auf ein Aufnehmerelement einwirken.

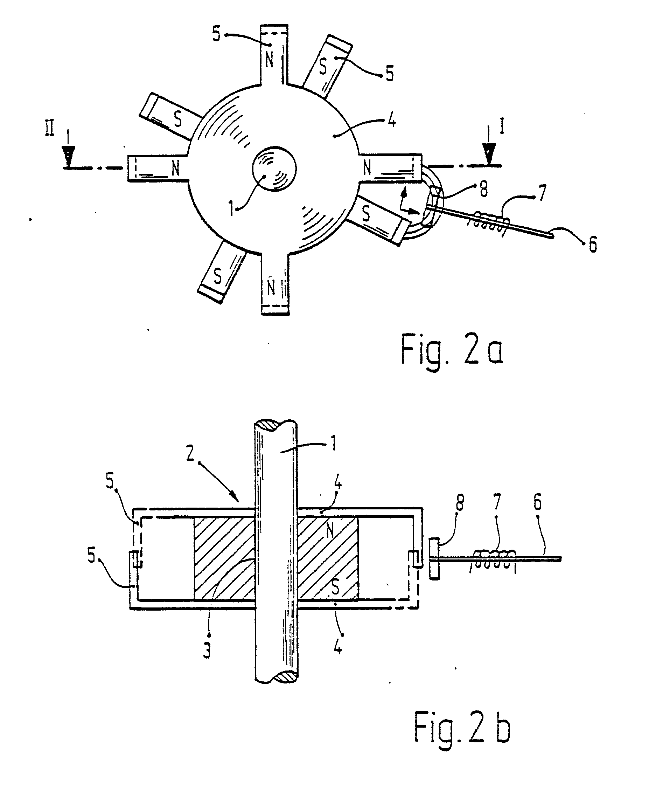

In Figur 2a und b ist ein weiteres Ausführungsbeispiel eines erfindungsgemäßen Polarisationssprunggebers dargestellt, das vorzugsweise zum Steuern des Zündfunkens bei Brennkraftmaschinen verwendet wird. Die in Figur 2a und b dargestellte Anordnung ist dabei in dem Gehäuse des Zündverteilers der Brennkraftmaschine untergebracht. Der Aufbau dieses Ausführungsbeispieles entspricht im wesentlichen dem aus Figur 1, allerdings entspricht hier die Anzahl der Klauenpolpaare der Anzahl der Zylinder der Brennkraftmaschine, wobei diese Klauenpolpaare äquidistant über den Umfang des Rotors 2 verteilt sind. Die Wirkungsweise der Anordnung ist dieselbe wie für Figur 1 beschrieben.

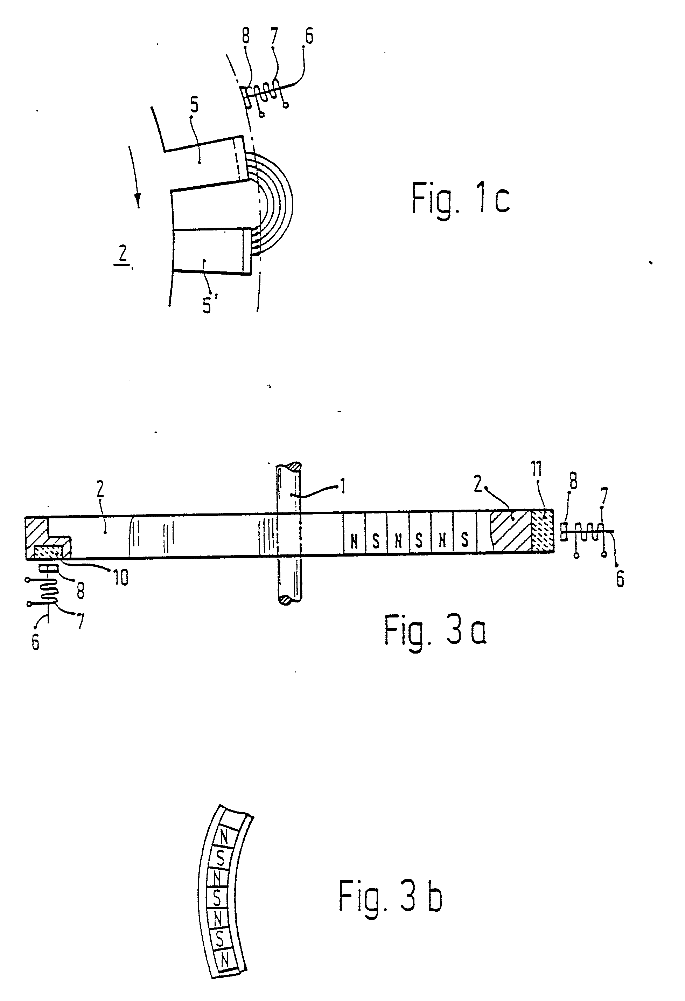

Schließlich ist in Figur 3 noch ein weiteres Ausführungsbeispiel dargestellt, das vorzugsweise zur Messung von niedrigen Drehzahlen verwendet wird, entsprechend dem Ausführungsbeispiel gemäß Figur 1. In Abweichung zu den Ausführungsbeispielen gemäß Figur 1 und 2 werden die Magnetpole beim Ausführungsbeispiel gemäß Figur 3 durch Magnete 10, 11, vorzugsweise Dauermagnete, gebildet, die auf dem Umfang des Stators 2 verteilt sind. Sie bestehen aus Einzelmagneten, oder aus Magnetstreifen, die mehrpolig aufmagnetisiert sind, vorzugsweise kunststoffgebundenen Dauermagneten. In einer ersten Variante dieses Ausführungsbeispiels (wie in Figur 3a links und in Figur 3b dargestellt) weisen die Pole der Einzelmagnete dabei nach unten und Draht 6 sowie Aufnehmerspule 7 sind unterhalb des Rotors 2 angeordnet. Demgegenüber weisen bei der anderen Variante (in Figur 3a rechts dargestellt) die Pole der Einzelmagnete 11 nach außen und Draht 6 sowie Aufnehmerspule 7 sind seitlich vom Rotor 2 angeordnet.

## Patentansprüche

1. Magnetischer Polarisationssprunggeber, bei dem elektrische Signale durch Ummagnetisieren eines mechanisch vorbehandelten Drahtes (6) in wenigstens einer Aufnehmerspule (7) induziert werden und die Ummagnetisierung durch nahe Relativbewegung einer Vielzahl von Magnetpolen unterschiedlicher Polarität am in Richtung der Achse der Magnetpole ausgerichteten Drahts (6) bewirkt wird, von dem nur ein Ende den gekrümmten Feldlinien des zwischen den Magnetpolen ausgebildeten Feldes ausgesetzt ist, wobei ferner die Magnetpole wenigstens näherungsweise parallel zueinander angeordnet sind, gekennzeichnet durch die Kombination folgender Merkmale

a) daß der Draht (6) an seinem den Magnetpolen zugewandten Ende ein senkrecht zur Längsachse des Drahtes (6) angeordnetes Leitblech (8) im Magnetfeld der Magnetpole aufweist ;

b) daß die Magnetpole von Klauenpolen (5, 5') zweier, einen um eine Welle (1) drehbaren Rotor (2) bildender Polleitbleche (4), zwischen denen ein Magnet (3) angeordnet ist, dargestellt werden.

2. Polarisationssprunggeber nach Anspruch 1, dadurch gekennzeichnet, daß eine der doppelten Zylinderzahl einer Brennkraftmaschine entsprechende Anzahl von Magnetpolen vorgesehen ist und der Geber zur Steuerung einer Zündanlage vorgesehen ist.

## Claims

1. Magnetic polarization step-change transmitter, in which electrical signals are induced in at least one pick-up coil (7) by magnetic reversal of a mechanically pretreated wire (6) and the magnetic reversal is effected by close relative movement of a plurality of magnetic poles of differing polarity on the wire (6), which is aligned in the direction of the axis of the magnetic poles and of which only one end is exposed to the curved flux lines of the field formed between the magnetic poles, furthermore the magnetic poles being arranged at least approximately parallel to each other, characterized by the combination of the following features

a) that the wire (6) has, at its end facing the magnetic poles, a deflector (8) arranged perpendicular to the longitudinal axis of the wire (6) in the magnetic field of the magnetic poles ;

b) that the magnetic poles are represented by claw poles (5, 5') of two pole deflectors (4) forming a rotor (2) which is rotatable about a shaft (1), between which pole deflectors is arranged a magnet (3).

2. Polarization step-change transmitter according to Claim 1, characterized in that a number of magnetic poles corresponding to twice the number of cylinders of an internal combustion engine is provided and the transmitter is provided for controlling an ignition system.

## Revendications

1. Générateur de discontinuités de polarisation magnétique, dans lequel des signaux électriques sont induits, dans au moins une bobine réceptrice (7), par l'inversion de magnétisation d'un fil prétraité mécaniquement (6) et dans lequel l'inversion de magnétisation est réalisée par le mouvement relatif, proche, d'un grand nombre de pôles magnétiques de polarité différente en face du fil (6) qui est aligné dans la direction de l'axe du pôle magnétique et dont seule une extrémité est exposée aux lignes courbées du champ formé entre les pôles magnétiques, étant précisé en outre que les pôles magnétiques sont disposés, au moins approximativement, parallèlement l'un à l'autre, caractérisé par la combinaison des caractéristiques suivantes :

a) que le fil (6) présente, à son extrémité tournée vers les pôles magnétiques, dans le champ magnétique des pôles magnétiques, une tôle guide (8) disposée perpendiculairement à l'axe longitudinal du fil (6).

b) que les pôles magnétiques sont représentés par des pôles à griffes (5, 5') de deux tôles guides polaires (4) qui forment un rotor (2) tournant autour d'un arbre (2) et entre lesquels est disposé un aimant (3).

2. Générateur de discontinuités de polarisation, selon la revendication 1, caractérisé en ce qu'il est prévu un nombre de pôles magnétiques correspondant au double du nombre de cylindres d'un moteur à combustion interne et en ce que le générateur est prévu pour la commande d'une installation d'allumage.

Fig. 1a

Fig. 1 b

0 090 821

Fig. 2 a

Fig. 2 b

Fig. 1c

Fig. 3a

Fig. 3b